**Europäisches Patentamt**

**European Patent Office**

**Office européen des brevets**

(19)

(11) Veröffentlichungsnummer: **0 110 070**
**B1**

# (12) EUROPÄISCHE PATENTSCHRIFT

(45) Veröffentlichungstag der Patentschrift:
**27.08.86**

(21) Anmeldenummer: **83110113.4**

(22) Anmeldetag: **11.10.83**

(51) Int. Cl.⁴: **H 01 H 83/00, H 02 H 9/04**

(54) **Installationsschutzschalter.**

(30) Priorität: **02.11.82 AT 3989/82**

(43) Veröffentlichungstag der Anmeldung:
**13.06.84 Patentblatt 84/24**

(45) Bekanntmachung des Hinweises auf die Patenterteilung:
**27.08.86 Patentblatt 86/35**

(84) Benannte Vertragsstaaten:
**AT CH DE FR GB IT LI NL**

(56) Entgegenhaltungen:
**DE - A - 1 488 913**
**DE - A - 2 853 697**
**US - A - 4 023 071**

**ETZ, Band 100, Nr. 24, 1979 P. HASSE "Schutz von
elektronischen Systemen vor Gewitterüberspannungen
(II)", Seiten 1376-1381
ETZ, Band 100**

(73) Patentinhaber: **BROWN, BOVERI & CIE
Aktiengesellschaft, Kallstadter Strasse 1,
D-6800 Mannheim 31 (DE)**

(72) Erfinder: **Biegelmeier, Gottfried, Prof. Dr.,
Heiligenstädterstrasse 187, A-1190 Wien (AT)**

(74) Vertreter: **Kempe, Wolfgang, Dr. et al, c/o Brown, Boveri
& Cie AG Postfach 351, D-6800 Mannheim 1 (DE)**

## Beschreibung

Die Erfindung bezieht sich auf einen Installationsschutzschalter mit einer Überstrom- und vorzugsweise auch einer Fehlerstromauslösung in einem Gehäuse, das vorzugsweise in Form von nebeneinander angeordneten Schaltfluchten für die Phasenleiter und den Neutralleiter ausgeführt ist, und in dem die Anschlussklemmen, die Kontakte für die Unterbrechung der Phasenleiter und des Neutralleiters oder ein durchgeführter Neutralleiter, das Schaltschloss oder die Schaltschlösser mit den thermischen und elektromagnetischen Auslösern und gegebenenfalls Spulen zur Kontaktabhebung, sowie eine elektronische Verstärkungseinrichtung oder ein elektromechanischer Fehlerstromauslöser mit dem Summenstromwandler zur Fehlerstromerfassung und eine Prüfeinrichtung untergebracht sind.

Derartige Schutzschalter, die eine Überstrom- und Fehlerstromauslösung besitzen, sind bekannt. So beschreibt z.B. die DE-B-1 169 015 einen derartigen Schalter, bei dem an einen als Leitungsschutzschalter ausgebildeten Bauteil quer zur Verbindungslinie der Anschlussklemmen ein Bauteil angesetzt ist, der den Fehlerstromauslöser enthält. Dabei ist zwischen den beiden Bauteilen ein Übertragungsglied zum Einwirken des Fehlerstromauslösers auf das Schaltschloss vorgesehen. In der DE-B-1 256 775 wird versucht, das Problem dadurch zu lösen, dass bei mehrpoligen Schaltern die Aufnahmeräume für die Schaltkontakte parallel zueinander und parallel zur Verbindungslinie der Anschlussklemmen angeordnet sind und dass der Schalterraum in drei Raumteile aufgeteilt ist, in denen Schaltstücke und Lichtbogenlöschvorrichtung in einem Raumteil, Kurzschluss- und Überstromauslöser sowie Schaltermechanik und Summenstromwandler in einem zweiten Raumteil, Fehlerstromrelais und Prüfeinrichtung in einem dritten Raumteil untergebracht sind. In der DE-B-1 280 382 wird wiederum vorgeschlagen, den LS-Schalterteil jedes Stromzweiges unabhängig von den übrigen LS-Schalter-Polstrecken zu machen und dabei alle Abzweige gemeinsam auf Fehlerstrom zu kontrollieren. Auch die DE-B-1 563 827 verwendet für einen kombinierten FI-LS-Schalter einen Fehlerstromschutzschalter, an den selbständige Schalter, insbesondere Leitungsschutzschalter angesetzt sind, deren Schaltschlösser in geeigneter Weise miteinander gekuppelt sind. Bei der DE-B-2 754 033 werden FI-Schalter und LS-Schalter derart miteinander verbunden, dass nur eine gemeinsame Eingangsklemme vorhanden ist. Hierbei bedeutet FI: Fehlerstrom und LS: Leitungsschutz. Die Verbindung von zwei Schaltmechanismen für den Fehlerstromschalter und den Leitungsschutzschalter beschreibt auch die Europäische Patentschrift 0014871 und die DE-B-2 654 373. Kombinierte FI-LS-Schalter mit netzspannungsabhängigen Verstärkungseinrichtungen werden in einer Reihe von Patentschriften beschrieben, etwa in der DE-B-2 730 874, DE-B-2 825 881, DE-B-2 338 785, DE-B-2 924 122 und der GB-A-1 107 879. Diese Lösungen beschreiben aber nur die elektrische Funktion der elektronischen Schaltungen und nicht den prinzipiellen Aufbau des FI-LS-Schalters.

Allen beschriebenen Lösungen fehlt aber eine wichtige Schutzfunktion, nämlich der Überspannungsschutz. Dieser Schutz wird in modernen elektrischen Anlagen immer wichtiger, weil immer mehr elektronische Bauelemente in elektrischen Betriebsmitteln verwendet werden, die besonders überspannungsempfindlich sind. So werden jährlich während der Gewitterperiode Fernsehapparate, Küchengeräte mit elektronischen Steuerungen, Waschmaschinen usw. durch Stossspannungswellen zerstört, ohne dass der bisher eingesetzte Überspannungsschutz mit Ventilableitern – meist in der Freileitung oder zentral im Hausanschluss oder beim Zähler montiert – imstande war, diese Schäden zu verhindern.

Es wurde zwar schon versucht, die Ableitertechnik zu verbessern, doch war diesen Bemühungen bisher noch kein Erfolg beschieden. So wird etwa in der FR-A-812 675 ein Überspannungsableiter in Serie mit einem Überstromschutzschalter, der beim Versagen des Ableiters diesen abschaltet, beschrieben. Um Fehlauslösungen des Überstromschutzschalters zu vermeiden, wird in der AT-A-3461/81 vorgeschlagen, den Ableiter in einem Gehäuse mit einem Überstromschutzschalter zusammenzubauen, dessen Auslösung kurz verzögert ist. In den EDN-Electrical News 1963.05, 12/13 «Circuit breaker combines Semiconductor, Magnetic Protection» wird ein Überstromschutzschalter beschrieben, dessen Magnetauslöser in Serie oder parallel mit einem Halbleiterbauelement liegt, das spannungsbegrenzend wirkt, und schliesslich nennt die GB-A-2 010 613 eine Lösung, bei der, auf die Richtung des Energieflusses bezogen, nach einem Leitungsschutzschalter ein Varistor zwischen die Aussenleiter und die Potentialausgleichsschiene geschaltet ist.

Aber nicht nur beim Überstromschutzschalter, auch beim Fehlerstromschutzschalter wurde bereits vorgeschlagen, Überspannungsableiter in einem gemeinsamen Gehäuse mit dem FI-Schutzschalter anzuordnen (DE-A-3 029 453), wobei die Überspannungsableiter zwischen die Netzleiter und die Erde bzw. die Potentialausgleichsschiene geschaltet sind.

Alle diese Lösungen konnten aber nicht verhindern, dass immer wieder Schäden in den elektrischen Anlagen durch Überspannungen auftraten. Es fehlt also ein Installationsschutzschalter für einen wirksamen Überstrom-, Überspannungs- und Berührungsspannungsschutz.

Dieser unbefriedigende Stand der Überspannungsschutztechnik hat seine Ursache darin, dass zwar eine ganze Reihe von Bauelementen für den Überspannungsschutz vorhanden sind, die jeweils Vorteile, aber auch Nachteile haben, aber bisher diese Bauelemente noch nicht so kombiniert wurden, dass in Niederspannungsanlagen Stossspannungsbeanspruchungen, besonders bei sehr steilen Spannungsanstiegen, auf für die Isolation ungefährliche Werte begrenzt werden. Dabei ist zu beachten, dass durch Reflexion zusätzliche Spannungserhöhungen im Leitungsverlauf auftreten, wenn sich der Wellenwiderstand der Leitung stark ändert, wobei Induktivitäten, wegen der hohen Frequenzen der Stossspannungswellen, eine besondere Rolle spielen.

Im einzelnen ist zu den verwendeten Überspannungsschutzelementen folgendes zu sagen:

Funkenstrecken oder edelgasgefüllte Ableiter allein können in den üblichen Netzen für die allgemeine Stromversorgung nicht zwischen Phasenleiter und den Neutralleiter oder die Potentialausgleichsschiene geschaltet werden, weil, nach dem Ansprechen der Ableiter, der als Folgestrom auftretende Netzkurzschlussstrom vom Ableiter kaum beherrscht werden kann. Deswegen müssen spannungsabhängige Widerstände in Serie geschaltet werden, und damit ergibt sich die heute übliche Bauform der Ventilableiter. Ihr Nachteil besteht in der relativ langen Ansprechzeit, die in der Grössenordnung $10^{-7}$ bis $10^{-6}$ sek liegt. Ihr Vorteil ist die galvanische Trennung der Erdverbindungen vom Netz während des normalen Betriebes und ein relativ hohes Energieabsorptionsvermögen.

Ableiter, die nur aus Metalloxydvaristoren bestehen, verursachen nach dem Ansprechen keinen Folgestrom vom Netz und sprechen in der Grössenordnung von Nanosekunden ($10^{-9}$s) an. Derartige Ableiter stellen eine, wenn auch sehr hochohmige, galvanische Verbindung zwischen den Phasenleitern und der Erde her, und daher können bei Isolationsmessungen Schwierigkeiten entstehen.

Zenerdioden, die meist in der Form von Suppressordioden eingesetzt werden, haben den Vorteil, dass ihre Ansprechzeit im Pikosekundenbereich ($10^{-12}$s) liegt, ihr Energieabsorptionsvermögen liegt aber nur in der Grössenordnung von einigen Joule, während die erstgenannten Ableitertypen einige hundert oder sogar tausend Joule Energieabsorptionsvermögen besitzen.

Sicher ist für den Schutz einer modernen Installation mit elektronischen Bauelementen der Kaskadenschutz in Form des Grobschutzes − Feinschutzes und Feinstschutzes die einzig mögliche Lösung und Kombinationen sind schon öfters beschrieben worden [siehe Wessel, W., «Schutzmassnahmen gegen Überspannungen», Schadenprisma Jahrgang 1981, Heft 2, S. 21, und Hasse, P., «Schutz von elektronischen Systemen vor Gewitterüberspannungen», ETZ-A, Bd. 100 (1979), H. 23 und 24, Seiten 1335–1340 und 1376–1380]. Sie werden als sogenannte Blitzductoren besonders für Mess-, Steuer- und Regelanlagen eingesetzt. Da sie Längsimpedanzen enthalten, sind sie für den Überspannungsschutz der allgemeinen Stromversorgung von Niederspannungsanlagen nicht geeignet.

Für derartige Anlagen wird in der US-A-4023071 ein Überspannungsschutzgerät beschrieben, das in einem Gehäuse einen gasgefüllten Ableiter, einen Varistor und eine Zenerdiode mit einigen Überstromschutz- und Meldeeinrichtungen vorsieht. Die drei Ableiter sind parallel geschaltet und die Einheit wird parallel zu der zu schützenden Anlage eingebaut. Nach dieser Patentschrift soll ein kaskadenförmiger Überspannungsschutz aufgebaut werden. Zuerst spricht die Zenerdiode nach einer Ansprechzeit im Pikosekundenbereich ($10^{-12}$s) an; bevor sie überlastet wird, schaltet der Metalloxydvaristor im Nanosekundenbereich und schliesslich übernimmt der Metalloxydvaristor die Entladung und schützt damit den Varistor vor Überlastung. Für den Fehlerfall sind verschiedene Überstromschutzorgane vorgesehen. Diese Anordnung ist aber nicht realisierbar, denn es wird übersehen, dass bei der niedrigen Netzimpedanz der gasgefüllte Ableiter nach dem Durchzünden nicht mehr löschen kann und explodieren würde.

Aufgabe der Erfindung ist es, einen Installationsschutzschalter der eingangs genannten Art zu schaffen, mit dem zusätzlich zum Überstrom- und Fehlerstromschutz ein Überspannungsschutz auf technisch einfache und wirtschaftliche Weise erreicht wird.

Diese Aufgabe wird erfindungsgemäss dadurch gelöst, dass kaskadenförmig − auf die Richtung des Energieflusses bezogen − für jeden Phasenleiter zwei Überspannungsableiter zusätzlich im Gehäuse des Installationsschutzschalters vorgesehen sind, wobei ein Ende eines Überspannungsleiters vor der Spule oder den Spulen des elektromagnetischen Auslösers oder der Spule oder den Spulen zur Kontaktabhebung mit dem Phasenleiter verbunden ist und ein Ende des zweiten Überspannungsableiters nach der Spule oder den Spulen des elektromagnetischen Auslösers oder der Spule oder den Spulen zur Kontaktabhebung mit dem Phasenleiter verbunden ist, und wobei die anderen Enden der beiden Überspannungsableiter an den Neutralleiter oder den Schutzleiter angeschlossen sind.

Die genannte Spule oder Spulen stellen dabei eine natürliche Längsimpedanz im Leitungsverlauf dar, die infolge der hohen Frequenz der Stosswelle eine Teilreflexion bewirkt. Dadurch gelangt nur eine Teilenergie zum Überspannungsableiter, der nach der Spule montiert ist. Natürlich kann zwischen diesen Anschlüssen auch noch der thermische Auslöser liegen, der jedoch infolge der Frequenzunabhängigkeit seines Widerstandes nur wenig zur Längsimpedanz bei Stossbeanspruchung beitragen kann. Die für den Erdanschluss vorgesehenen Klemmen der beiden Ableiter werden in einem genullten Netz (TN-Netz) im Installationsschalter mit dem Neutralleiter verbunden, der über die Verteilertafel mit der Potentialausgleichsschiene und/oder mit dem Schutzleiter verbunden ist.

In einer Anlage, in der die Schutzerdung oder die FI-Schutzschaltung angewendet wird, werden die für den Erdanschluss vorgesehenen Klemmen der beiden Ableiter vorzugsweise mit dem Schutzleiter verbunden. Sie können aber auch mit dem Neutralleiter verbunden werden. Werden dann noch, wie heute schon üblich, zusätzlich zum erfindungsgemässen Installationsschutzschalter in der Zählerverteilung Ableiter mit Funkenstrecken eingebaut, dann ergibt sich eine Dreifachkaskade für den Überspannungsschutz, der auch empfindliche elektronische Bauteile in der Installation weitestgehend schützt. In genullten Anlagen sind dafür drei, ansonsten vier Ableiter in der Zählerverteilung notwendig.

Die beiden Ableiter im Installationsschutzschalter werden erfindungsgemäss so aufeinander abgestimmt, dass sie in bezug auf Ansprechspannung, Ansprechzeit und Energieabsorptionsvermögen zusammenarbeiten, wobei der Ableiter, der vor der Spule oder den Spulen montiert ist, den grössten Anteil der Stossenergie ableiten muss und den Ableiter nach der Spule oder den Spulen vor Überlastung schützt. Vorteilhafterweise hat erfindungsgemäss der Ableiter, der vor der Spule oder den Spulen mit dem Phasenleiter verbunden ist, eine Ansprechzeit in der Grössenordnung von einigen zehntel bis zu einigen zehn Nanosekunden ($10^{-9}$s) und ein möglichst hohes Energieabsorptionsvermögen und der Ableiter, der nach der Spule oder den Spulen mit dem Phasenleiter verbunden ist, eine kleinere Ansprechzeit bis zu einigen Pikosekunden ($10^{-12}$s) herab und ein kleineres Energieabsorptionsvermögen. Erfindungsgemäss sind die beiden Ableiter so aufeinander abgestimmt, dass, noch bevor die höchstzulässige Energieabsorption des zuerst ansprechenden Ableiters überschritten wird, der später ansprechende Ableiter mit seiner Energieabsorption beginnt und auf diese Weise beide Ableiter im normalen Betriebsbereich vor Überlastung und Zerstörung und die elektrische Anlage vor Überspannungen weitgehend geschützt werden.

Erfindungsgemäss kann der Ableiter, der vor der Spule oder den Spulen mit dem Phasenleiter verbunden ist, aus einem Metalloxydvaristor bestehen und der Ableiter, der nach der Spule oder den Spulen mit dem Phasenleiter verbunden ist, kann als Suppressordiode (TAZ-Diode) ausgeführt werden. Erfindungsgemäss kann die Verbindung der beiden Ableiter mit dem Neutralleiter – auf die Richtung des Energieflusses bezogen – vor dem Unterbrecherkontakt des Neutralleiters erfolgen, falls ein solcher vorhanden ist.

In manchen Installationsvorschriften wird nämlich der Neutralleiter nur durchgeführt und nicht geschaltet. In diesem Fall bereitet die Fehlersuche Schwierigkeiten, wenn der Neutralleiter einen Erdschluss bekommt und, da die Ableiter zwischen Aussenleiter und Neutralleiter angeschlossen sind, kann auch eine Isolationsprüfung zwischen Aussen- und Neutralleiter nicht mehr durchgeführt werden. Diese Schwierigkeiten vermeidet man, wenn der Neutralleiter geschaltet wird und die Ableiter vor dem Unterbrecherkontakt angeschlossen werden. Wird der Schalter ausgeschaltet, dann sind die Ableiteranschlüsse vom anlagenseitigen Neutralleiter getrennt und eine Isolationsprüfung zwischen Aussen- und Neutralleiter kann einwandfrei durchgeführt werden.

Man kann auch erfindungsgemäss einen oder beide Ableiter – auf die Richtung des Energieflusses bezogen – nach dem Summenstromwandler mit dem Phasenleiter verbinden, so dass bei Beschädigung eines Ableiters auch kleinere Netzströme, die über den Ableiter fliessen, zum Ansprechen der Fehlerstromauslösung führen. Um den Installationsschutzschalter gegen Stossströme unempfindlich zu machen und zu vermeiden, dass er durch Folgeströme von Ableitern, die nach dem Summenstromwandler mit dem Phasenleiter verbunden sind, ausgelöst wird, kann erfindungsgemäss die Fehlerstromauslösung über ein Zeitverzögerungselement erfolgen.

Besitzt diese Fehlerstromauslösung elektronische Bauteile, dann können diese erfindungsgemäss gegen Überspannungen geschützt werden, indem man sie parallel zu dem zuerst ansprechenden Überspannungsableiter schaltet.

Schliesslich können erfindungsgemäss der zuerst ansprechende Ableiter den anlagenseitigen Anschlussklemmen und der in der Folge ansprechende Ableiter den netzseitigen Anschlussklemmen des Installationsschutzschalters direkt parallel geschaltet werden.

Aufbaumässig kann man erfindungsgemäss den Installationsschutzschalter etwa so gestalten, dass das Gehäuse aus nebeneinander angeordneten Schaltfluchten für die Phasenleiter und den Neutralleiter besteht und dass in einem zusätzlichen Bauteil, der in seiner Formgebung den Schaltfluchten angepasst ist, die beiden Ableiter untergebracht sind und dieser Bauteil neben oder zwischen den Schaltfluchten für die Phasenleiter und den Neutralleiter angeordnet ist. Man kann aber auch zwei Anbauteile vorsehen, die durch Steck- oder Schraubverbindungen oder auf eine andere geeignete Art mit dem Hauptteil des Installationsschutzschalters verbunden werden, wobei in einem Anbauteil, der die netzseitigen Anschlussklemmen trägt, die später ansprechende Ableitergruppe und in dem anderen Anbauteil, der die anlagenseitigen Anschlussklemmen trägt, die zuerst ansprechende Ableitergruppe untergebracht ist.

Anhand der Zeichnung, in der einige Ausführungsbeispiele der Erfindung dargestellt sind, sollen die Erfindung, weitere vorteilhafte Ausgestaltungen und Verbesserungen sowie weitere Vorteile der Erfindung näher erläutert und beschrieben werden.

Es zeigt:

Fig. 1 eine Schaltungsanordnung zum Schutz einer Steckdose in einer genullten Anlage mit dem erfindungsgemässen Installationsschutzschalter;

Fig. 2 eine Schaltungsanordnung zum Schutz einer Steckdose in einer durch Fehlerstromschutzschaltung geschützten Anlage mit dem erfindungsgemässen Installationsschutzschalter;

Fig. 3 eine Schaltungsanordnung zum Schutz einer Steckdose in einer genullten Anlage mit einem erfindungsgemässen Installationsschutzschalter mit Überstrom- und Fehlerstromauslösung;

Fig. 4 eine Schaltungsanordnung eines zweipoligen Installationsschutzschalters gemäss der Erfindung;

Fig. 5 eine Schaltungsanordnung eines weiteren Ausführungsbeispieles des erfindungsgemässen Installationsschutzschalters;

Fig. 6 eine Schaltungsanordnung ähnlich der der Fig. 5 gemäss der Erfindung;

Fig. 7 die Schaltungsanordnung eines Installationsschutzschalters gemäss der Erfindung mit einer netzspannungsabhängigen Fehlerstromauslösung;

Fig. 8 die Schaltungsanordnung eines Hauptsicherungsautomaten gemäss der Erfindung;

Fig. 9 eine Aufsicht auf einen erfindungsgemässen Installationsschutzschalter;

Fig. 10 eine Aufsicht auf eine weitere Ausgestaltung eines erfindungsgemässen Installationsschutzschalters, und

Fig. 11 die schematische Darstellung eines erfindungsgemässen Installationsschutzschalters mit der Darstellung aller erfindungsgemässen Funktionselemente.

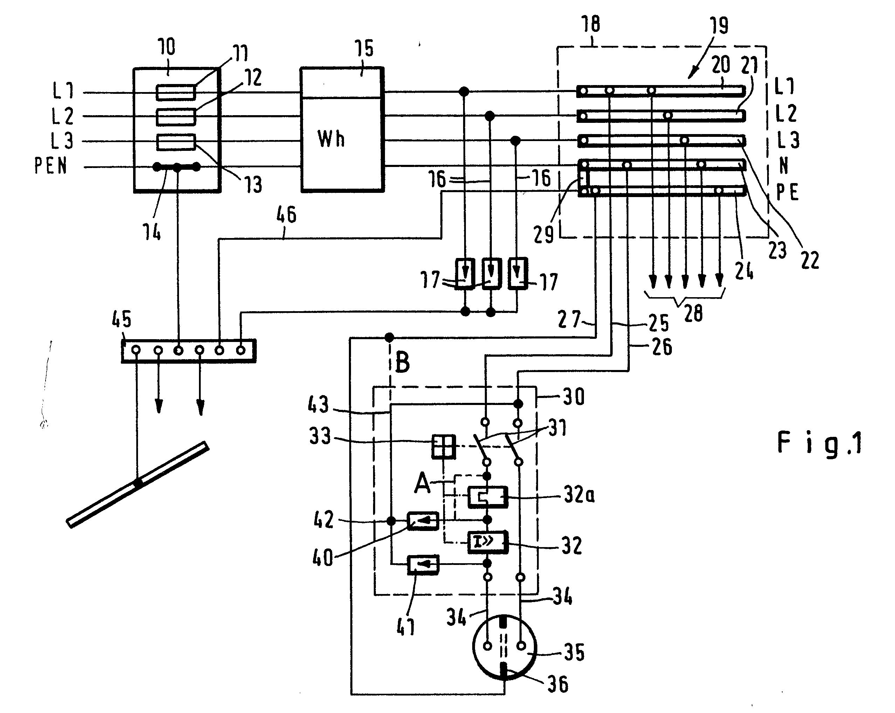

Es wird nun Bezug genommen auf die Fig. 1. Dort ist eine Schaltungsanordnung gezeigt, mit der eine Steckdose in einer genullten Anlage mittels des erfindungsgemässen Installationsschutzschalters mit eingebauter Überstromauslösung geschützt wird.

Das Netz, von dem aus der zu schützende Stromzweig (siehe weiter unten) abzweigt, wird gebildet durch die Phasenleiter L1, L2, L3 und den PEN-Leiter. Zum Schutz der Phasenleiter ist ein Sicherungskasten 10 mit Hauptsicherungen 11, 12 und 13 vorgesehen, wobei im PEN-Leiter eine Abzweigklemme 14 vorgesehen ist. Hinter dem Sicherungskasten 10 befindet sich ein Zähler 15, der – in allgemein bekannter Weise aufgebaut – zum Erfassen des entnommenen Stromes dient. Ein derartiger Zähler kann beispielsweise als Wirbelstromzähler ausgebildet sein.

Hinter dem Zähler 15 sind Abzweigleitungen 16 angeschlossen, in die Überspannungsableiter 17 eingeschaltet sind. In einem strichliert angedeuteten Gehäuse 18 ist eine Zählerverteilung 19 eingebaut, die Verteilschienen 20 bis 24 aufweist, von denen Abzweigleitungen 25, 26 und 27 bzw. 28 zu Verbrauchern abzweigen. Die Verteilschiene 20 ist dem Phasenleiter L1, die Verteilschiene 21 dem Phasenleiter L2, die Verteilschiene 22 dem Phasenleiter L3, die Verteilschiene 23 dem Neutralleiter N und die Verteilschiene 24 dem PE-Leiter zugeordnet; der PEN-Leiter verzweigt sich innerhalb der Zählerverteilung einmal in die Verteilschiene für den Neutralleiter N und in die Verteilschiene 24 für den PE-Leiter über ein Zwischenstück 29.

Es seien nunmehr die Abzweigleitungen 25 bis 27 betrachtet. Die Abzweigleitung 25 ist mit der dem Phasenleiter L1 zugeordneten Verteilschiene 20 und die Phasenleitung 26 mit der dem Neutralleiter N zugeordneten Verteilschiene verbunden. Die Abzweigleitung 27 sitzt an der Verteilschiene 24, die dem PE-Leiter zugeordnet ist.

Die beiden Abzweigleitungen 25 und 26 sind an nicht näher dargestellten Anschlussklemmen eines Installationsschutzschalters 30 angeschlossen, der Schaltkontakte 31 für die beiden Abzweigleiter 25 und 26 aufweist, die von einem in den Abzweigleiter 25 eingeschalteten thermischen Überstromauslöser 32a und einem elektromagnetischen Auslöser 32 betätigt werden. Als thermischer Überstromauslöser kann ein Thermobimetall-Auslöser vorgesehen sein, wogegen als magnetischer Auslöser eine in bekannter Weise aufgebaute elektromagnetische Schlagankerspule verwendet werden kann. Die bleibende Auslösung der Schaltkontakte 31 erfolgt über ein Schaltschloss 33, das ebenfalls in üblicher Weise aufgebaut ist. Die strichpunktiert eingetragenen Linien entsprechen den Wirkungslinien des elektromagnetischen und thermischen Auslösers sowie den Wirkungslinien des Schaltschlosses auf die Kontaktstücke.

Das andere Ende des Installationsschutzschalters 30 ist mittels Verbindungsleitungen 34 mit einer Steckdose 35 verbunden, die an einen Schutzleiter 36 angeschlossen ist, der auf die Verteilschiene 24 geschaltet ist.

Zwischen dem thermischen Überstromauslöser 32a und dem magnetischen Überstromauslöser 32 ist ein Überspannungsableiter 40 und hinter dem magnetischen Überstromauslöser 32 ein weiterer Überspannungsableiter 41 angeschlossen, deren anderes Bein miteinander an der Stelle 42 verbunden und über einen Zwischenleiter 43 auf den Abzweigleiter 26 geschaltet ist. Der Überspannungsableiter 41 ist so bemessen, dass er zuerst anspricht, wogegen der Überspannungsableiter 40 so bemessen ist, dass er später anspricht. Der zuerst ansprechende Überspannungsableiter 41 sitzt bezogen auf das Netz hinter dem elektromagnetischen Überstromauslöser 32 also hinter dessen Spule, wogegen der später ansprechende Überspannungsableiter 40 vor der Spule oder, wie durch die strichlierte Linie A angedeutet ist, vor der Spule und vor dem thermischen Überstromauslöser 32a sitzt und mit dem Abzweigleiter 25 verbunden ist. Die Klemmen der beiden Ableiter, die für den Erdanschluss vorgesehen sind, werden vor oder nach dem Unterbrecherkontakt mit dem Neutralleiter N und/oder auch mit dem Schutzleiter verbunden, siehe strichlierte Verbindung B.

Der PEN-Leiter ist von der Abzweigklemme 14 ausgehend mit einer Potentialausgleichschiene 45 verbunden, an die zusätzlich auch die Verbindungsschiene 46 angeschlossen ist. An diese Potentialausgleichschiene sind auch die Schutzleiter der Anlage bzw. die Überspannungsableiter 17 angeschlossen.

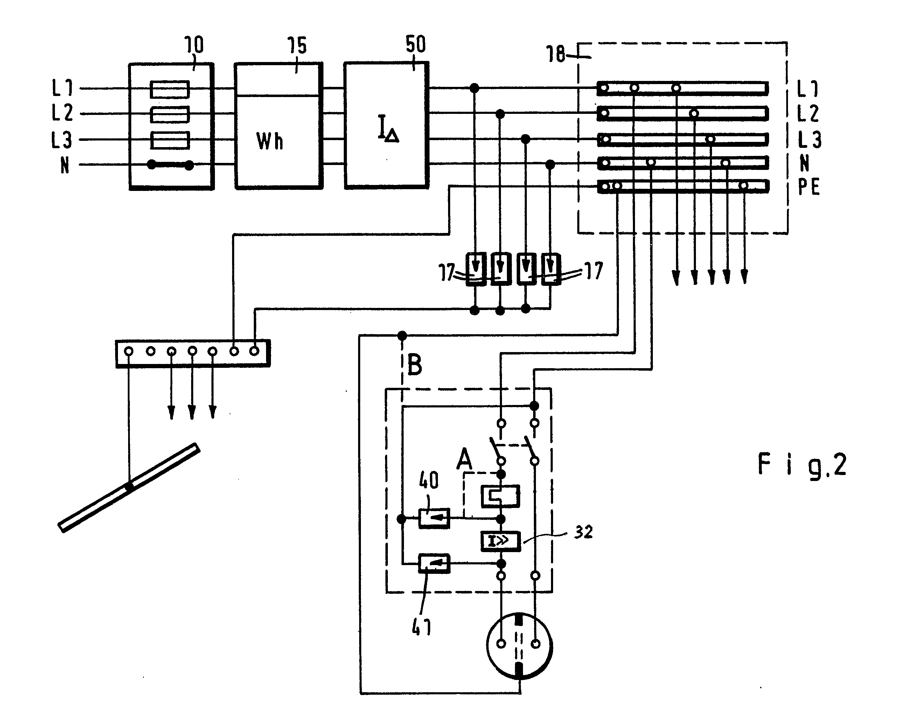

Die Fig. 2 zeigt eine der Fig. 1 ähnliche Schaltungsanordnung. Zwischen dem Zähler 15 und dem Gehäuse 18 ist eine Fehlerstromauswerteeinrichtung 50 geschaltet, die in üblicher Weise als Fehlerstromschutzbauteil oder Fehlerstromschutzschalter ausgebildet sein kann. Diese Ausgestaltung ist für die Erfindung selbst nicht von wesentlicher Bedeutung, soll aber aufzeigen, dass die Erfindung auch dann angewandt werden kann, wenn eine Fehlerstromauswerteeinrichtung 50 vorgesehen ist. Im Gegensatz zu der Schaltungsanordnung gemäss Fig. 1 fehlt die Verbindung des PEN-Leiters mit einer Potentialausgleichsschiene und zusätzlich müssen in die Zählerverteilung vier Überspannungsableiter 17 eingebaut werden und zwar zusätzlich für den Neutralleiter N einen zusätzlichen Überspannungsableiter. Die Überspannungsableiter 40 und 41 sind in der gleichen Weise angeordnet wie in der Schaltungsanordnung nach Fig. 1; sie müssen mit dem Neutralleiter N oder gemäss der strichlierten Verbindung B mit dem PE- bzw. Schutzleiter verbunden werden. In diesem Falle ist eine gleichzeitige Verbindung mit Schutz- und Neutralleitern nicht zulässig, weil dadurch der vorgeschaltete Fehlerstromschutzschalter fehlerhaft auslösen würde. Dies gilt auch für genullte Anlagen, in denen z.B. für den Branschutz Fehlerstromschutzschalter eingebaut werden.

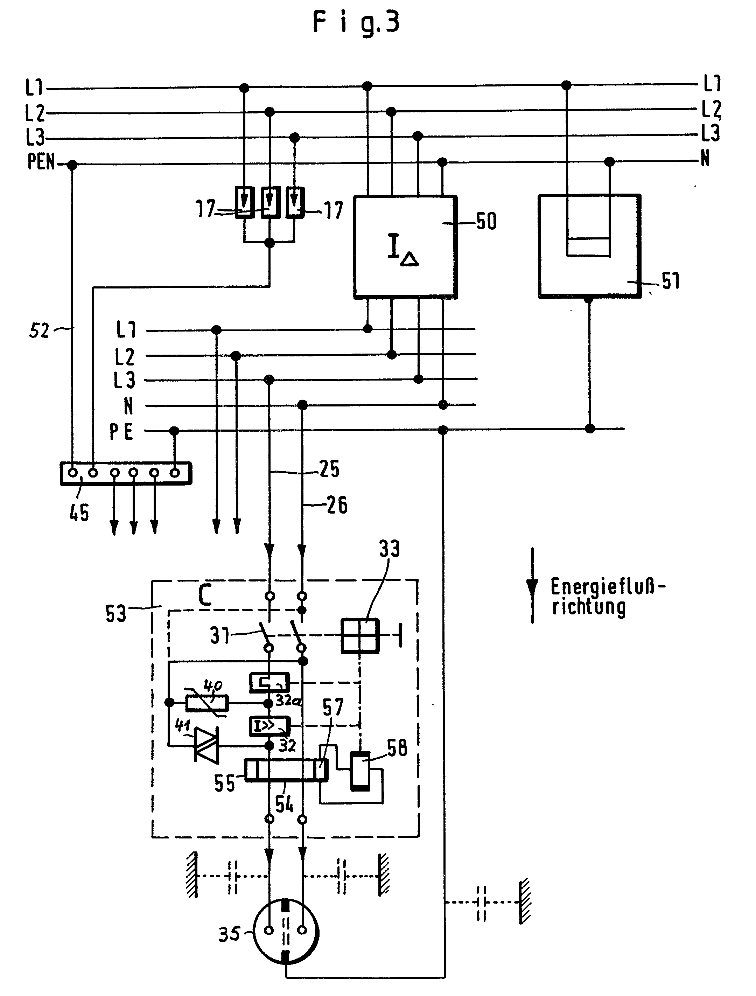

Fig. 3 zeigt beispielhaft den Schutz einer Steckdose in einer genullten Anlage durch den erfindungsgemässen Installationsschutzschalter mit einer Überstrom- und Fehlerstromauslösung. Die Schutzmassnahme Nullung (TN-Netz) wird durch eine Nullungsverbindung 52 vom PEN-Leiter zur Potentialausgleichsschiene 45 hergestellt. Als zusätzlicher Brandschutz ist zentral ein Fehlerstromschutzschalter 50 stossstromfest-selektiv im Zählerverteiler montiert. Im Hausanschlusskasten oder beim Zähler, oder weniger günstig auf dem letzten Freileitungsmast, sind drei Überspannungsableiter 17 angeordnet. Fest angeschlossene Verbraucher 51, z.B. Tiefkühltruhen, werden direkt genullt. Die Steckdosenstromkreise werden durch erfindungsgemässe Installationsschutzschalter geschützt. Der Installationsschutzschalter mit seinem Gehäuse 53 besteht aus den Schaltkontakten 31, die vom Schaltschloss 33 betätigt werden. Das Schaltschloss wird entweder vom thermischen Überstromauslöser 32a, dem elektromagnetischen Überstromauslöser 32 oder von einem Fehlerstromauslöser 54 betätigt. Der Summenstromwandler 55 dient zur Fehlerstromerfassung. Vor der Spule des Überstromauslösers 32 ist ein Überspannungsableiter 40, z.B. ein Metalloxydvaristor, an den Phasenleiter angeschlossen. Hinter der Spule des Überstromauslösers 32 sorgt der Überspannungsableiter 41, z.B. in Form einer Suppressordiode, für das Ableiten von Überspannungen. Damit wird die Steckdose 35 vollkommen gegen Überströme, Fehlerströme und Überspannungen geschützt. Die gemeinsame Anschlussleitung der beiden Ableiter für den Anschluss an den Neutralleiter kann entweder vor oder nach den Schaltkontakten 31 erfolgen (strichlierte Verbindung C).

Der kreisförmige oder kreisringförmige Summenstromwandler 55 ist von den Abzweigleitungen 25 und 26 als Primärwicklung durchgriffen. Eine Sekundärwicklung 57 ist mit einem Auslöserelais 58 verbunden, das das Schaltschloss 33 ebenso wie der thermische und der elektromagnetische Überstromauslöser 32a bzw. 32 entklinkt.

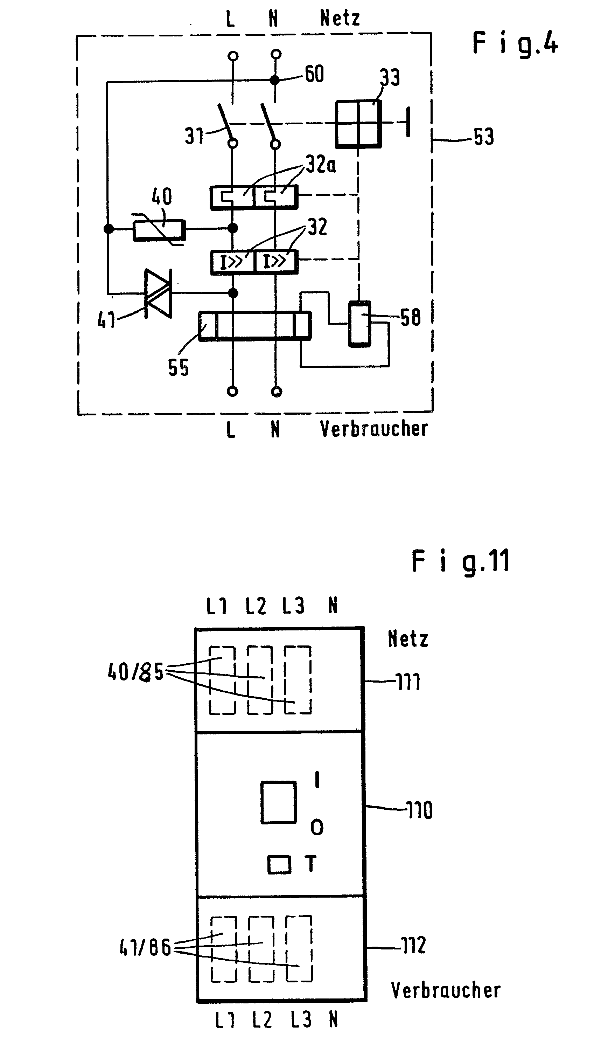

Fig. 4 zeigt beispielhaft einen zweipoligen Installationsschutzschalter, der auch im Neutralleiter N Überstromauslöser 32a und 32 besitzt und bei dem der neutralleiterseitige Ableiteranschluss 60 vor den Unterbrecherkontakten erfolgt. Dadurch ist verbraucherseitig bei ausgeschaltetem Schalter eine Isolationswiderstandsmessung und eine Fehlersuche möglich.

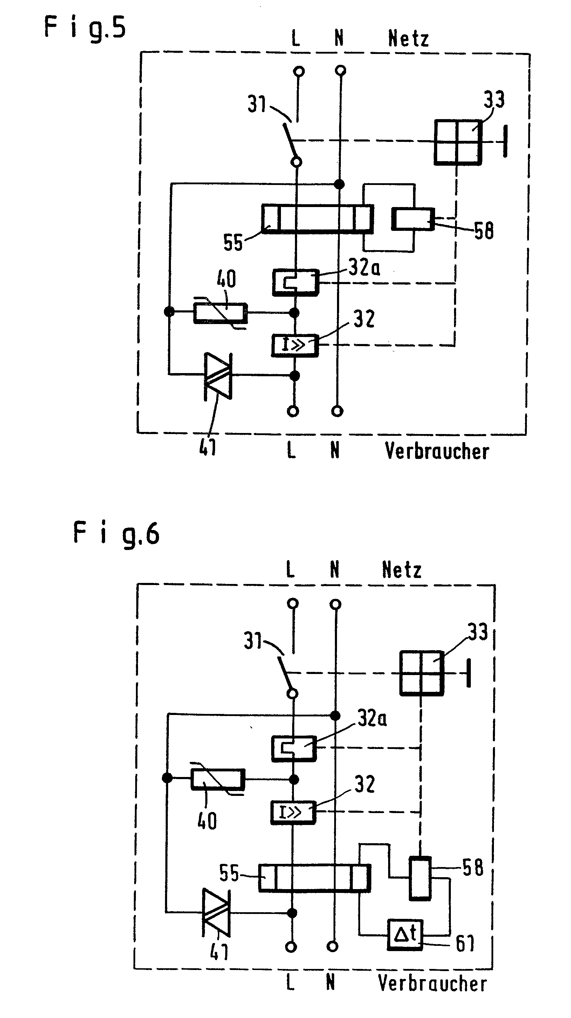

Fig. 5 zeigt beispielhaft die Ausführung eines Installationsschutzschalters, bei dem der Summenstromwandler 55 unmittelbar nach den Schaltkontakten 31 angeordnet ist, womit beide Überspannungsableiter 40 und 41 durch die Fehlerstromauslösung im Versagensfall geschützt werden. Bei dieser Ausführung ist der Neutralleiter N ohne Unterbrecherkontakt durch den Schalter geführt, wie dies bei manchen Nullungssystemen gebräuchlich ist.

Fig. 6 zeigt die gleiche beispielhafte Ausführung, bei der jedoch nur die Suppressordiode 41 hinter dem Summenstromwandler 55 angeschlossen ist und durch die Fehlerstromauslösung geschützt wird. Vorteilhafterweise wird man die Fehlerstromauslösung durch Einbau eines Zeitverzögerungselementes 61 stossstromfest gestalten.

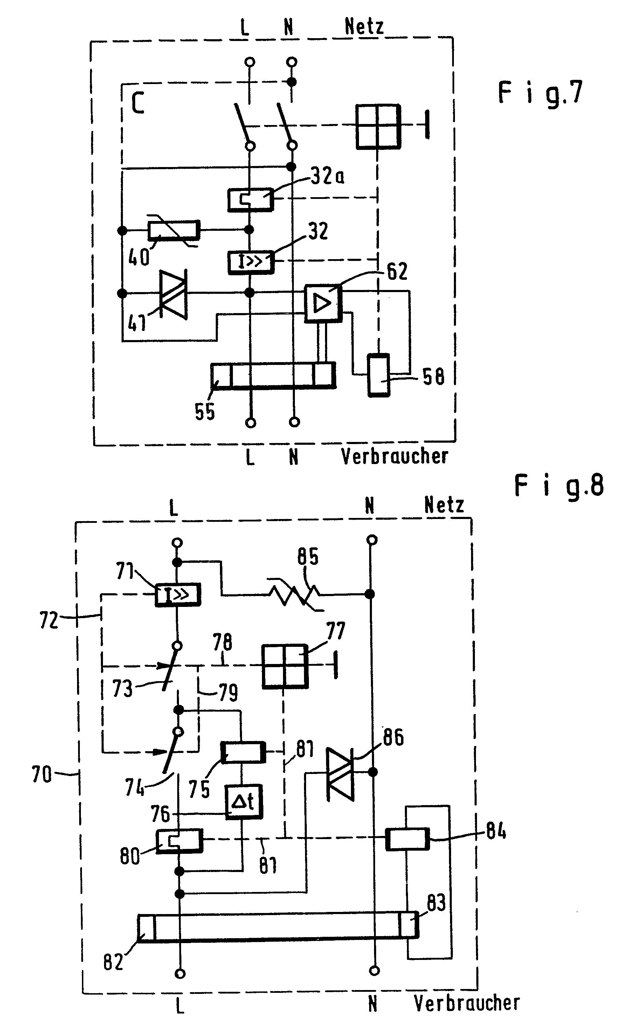

Fig. 7 zeigt beispielhaft einen Installationsschutzschalter mit einer netzspannungsabhängigen Fehlerstromauslösung über einen elektronischen Verstärker 62, dessen Anschluss ans Netz parallel zur Suppressordiode 41 erfolgt, womit die elektronischen Bauteile gegen Überspannungen geschützt werden. Auch hier kann die gemeinsame Anschlussleitung der beiden Ableiter an den Neutralleiter vor oder nach den Unterbrecherkontakten erfolgen (strichlierte Verbindung C).

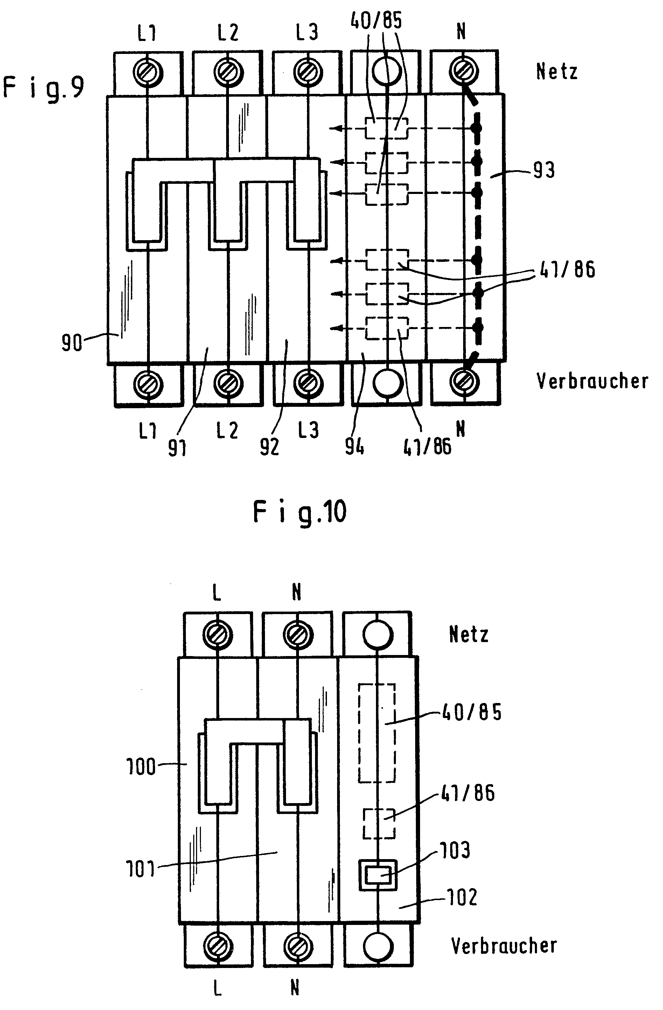

Die Fig. 8 zeigt beispielhaft einen Hauptsicherungsautomaten 70 mit einem elektromagnetischen Schlagankersystem 71, das über eine strichlierte Wirkungslinie 72 auf zwei Kontaktstellen 73 und 74 einwirkt, um diese im Kurzschlussfall strombegrenzend zu öffnen. Wird der Kurzschluss durch einen nachgeschalteten Leitungsschutzschalter weggeschaltet, dann schliessen die Kontakte wieder und der Hauptsicherungsautomat bleibt in der Einschaltstellung. Wenn der Kurzschluss bleibt, wenn also unmittelbar hinter dem Hauptsicherungsautomaten ein Kurzschluss auftritt oder der nächste Leitungsschutzschalter beschädigt ist, wird der Strom mittels des Kontaktes bzw. der Öffnung der Kontaktstelle 74 auf einen Selektivschutzauslöser 75 kommutiert, der – von einem Zeitverzögerungselement 76 beeinflusst – ein Schaltschloss 77 entklinkt und damit über die Wirklinien 78 und 79 die Kontaktstellen 73 und 74 bleibend öffnet. Zwischen der Kontaktstelle 74 und dem Anschluss des Zeitverzögerungsgliedes 76 an den Phasenleiter ist ein thermischer Auslöser 80, beispielsweise in Form eines Thermobimetalles, angebracht, der über die Wirklinie 81 auf das Schaltschloss 77 zur bleibenden Öffnung einwirkt. Hinter dem Auslöser 80 ist ein Summenstromwandler 82 eingeschaltet, dessen Sekundärwicklung 83 ein Auslöserelais 84 betätigt, das ebenfalls auf das Schaltschloss 77 einwirkt. Der Schalter besitzt einen ersten Ableiter 85, der mit einem Bein zwischen der Anschlussklemme des Schalters und der Spule des Schlagankersystems 71 mit dem Phasenleiter L und mit dem anderen Bein an den Neutralleiter N angeschlossen ist.

Dieser Ableiter 85 ist ein Metallvaristor. Hinter dem thermischen Auslöser 80 und ebenfalls mit dem Neutralleiter verbunden ist ein weiterer Ableiter 86 angeschlossen, die beide so einander zugeordnet sind, dass der Ableiter 86, der dem Überspannungsableiter 40 entspricht, schneller anspricht und ein geringeres Energieabsorptionsvermögen besitzt als der Ableiter 85, der dann auch zum Schutz des Ableiters 86 dient.

Fig. 9 zeigt beispielhaft einen Installationsschutzschalter mit einem Gehäuse, das aus nebeneinander angeordneten Schaltfluchten für die Phasenleiter 90, 91, 92 und für den Neutralleiter 93 besteht. Ein zusätzliches Bauteil 94, das in seiner Formgebung den Schaltfluchten für die Phasenleiter und den Neutralleiter angepasst ist und in dem die Überspannungsableitergruppen 40/85 und 41/86 untergebracht sind, ist zwischen den Schaltfluchten für die Phasenleiter und den Neutralleiter angeordnet.

Fig. 10 zeigt beispielhaft einen Installationsschutzschalter mit einem Gehäuse, das aus nebeneinander angeordneten Schaltfluchten für den Phasenleiter 100 und für den Neutralleiter 101 besteht. Ein zusätzliches Bauteil 102, das in seiner Formgebung den Schaltfluchten für den Phasenleiter und den Neutralleiter angepasst ist und in dem die beiden Überspannungsableiter 40/85 und 41/86 sowie eine Prüfeinrichtung 103 für die Fehlerstromauslösung untergebracht sind, ist neben den Schaltfluchten für den Phasenleiter und den Neutralleiter befestigt. Stromkreise für die Prüfeinrichtung 103 sind der Einfachheit halber in den Fig. 1 bis 9 nicht eingezeichnet.

Fig. 11 zeigt schliesslich beispielhaft einen Installationsschutzschalter mit einem Hauptteil 110, der alle elektrischen Funktionselemente für die Überstrom- und Fehlerstromauslösung enthält, und zwei Anbauteilen 111 und 112, die durch Steck- oder Schraubverbindungen oder auf eine andere geeignete Art mit dem Hauptteil des Installationsschutzschalters verbunden werden, wobei in dem Anbauteil, der die netzseitigen Anschlussklemmen trägt, die später ansprechende Ableitergruppe 40/85 und in dem anderen Anbauteil 112, der die anlagenseitigen Anschlussklemmen trägt, die zuerst ansprechende Ableitergruppe 41/86 untergebracht ist.

**Patentansprüche**

1. Installationsschutzschalter mit einer Überstrom- und vorzugsweise auch einer Fehlerstromauslösung in einem Gehäuse, das vorzugsweise in Form von nebeneinander angeordneten Schaltfluchten für die Phasenleiter (L1, L2, L3) und den Neutralleiter (N) ausgeführt ist, und in dem die Anschlussklemmen, die Kontakte (31) für die Unterbrechung der Phasenleiter und des Neutralleiters oder ein durchgeführter Neutralleiter, das Schaltschloss (33; 77) oder die Schaltschlösser mit den thermischen und elektromagnetischen Auslösern und gegebenenfalls Spulen (71) zur Kontaktabhebung, sowie eine elektronische Verstärkereinrichtung (62) oder ein elektromechanischer Fehlerstromauslöser (54) mit dem Summenstromwandler (55) zur Fehlerstromerfassung und eine Prüfeinrichtung untergebracht sind, dadurch gekennzeichnet, dass kaskadenförmig – auf die Richtung des Energieflusses bezogen – für jeden Phasenleiter (L1, L2, L3) zwei Überspannungsableiter (40, 41; 85, 86) zusätzlich im Gehäuse des Installationsschutzschalters vorgesehen sind, wobei ein Ende eines Überspannungsableiters (40; 85) vor der Spule (32) oder den Spulen des elektromagnetischen Auslösers oder der Spule oder den Spulen zur Kontaktabhebung mit dem Phasenleiter verbunden ist und ein Ende des zweiten Überspannungsableiters (41; 86) nach der Spule (32) oder den Spulen des elektromagnetischen Auslösers oder der Spule (71) oder den Spulen zur Kontaktabhebung mit dem Phasenleiter verbunden ist, und wobei die anderen Enden der beiden Überspannungsableiter an den Neutralleiter (N) oder den Schutzleiter (PE) angeschlossen sind.

2. Installationsschutzschalter nach Anspruch 1, dadurch gekennzeichnet, dass die beiden Überspannungsableiter (40, 85; 41, 86) so aufeinander abgestimmt sind, dass noch bevor die höchstzulässige Energieabsorption des zuerst ansprechenden Überspannungsableiters (41, 86) überschritten wird, der später ansprechende Überspannungsableiter (40, 85) mit seiner Energieabsorption beginnt und auf diese Weise beide Ableiter im normalen Betriebsbereich vor Überlastung und Zerstörung und die elektrische Anlage vor Überspannungen weitgehend geschützt werden.

3. Installationsschutzschalter nach Anspruch 1 oder 2, dadurch gekennzeichnet, dass der Überspannungsableiter (40, 85), der vor der Spule (32) oder den Spulen des elektromagnetischen Auslösers oder zur Spule (71) oder den Spulen zur Kontaktabhebung mit dem Phasenleiter verbunden ist, eine Ansprechzeit bei Auftreten einer Überspannungswelle in der Grössenordnung von einigen Zehntel bis zu einigen zehn Nanosekunden ($10^{-9}$s) und ein möglichst hohes Energieabsorptionsvermögen besitzt, dass der Überspannungsableiter (41, 86), der nach der Spule (32) oder den Spulen des elektromagnetischen Auslösers oder der Spule (71) oder den Spulen zur Kontaktabhebung mit dem Phasenleiter verbunden ist, eine kleinere Ansprechzeit bis zu einigen Pikosekunden ($10^{-12}$s) herab und ein kleineres Energieabsorptionsvermögen als der vorgeschaltete Überspannungsableiter (40, 85) aufweist, und dass beide Überspannungsableiter so aufeinander abgestimmt sind, dass noch bevor die höchstzulässige Energieabsorption des zuerst ansprechenden Überspannungsableiters überschritten wird, der später ansprechende Überspannungsableiter mit seiner Energieabsorption beginnt und auf diese Weise beide Ableiter im normalen Betriebsbereich vor Überlastung und Zerstörung und die elektrische Anlage vor Überspannungen weitgehend geschützt sind.

4. Installationsschutzschalter nach einem der Ansprüche 1 bis 3, dadurch gekennzeichnet, dass der Überspannungsableiter (40, 85), der vor der Spule (71) oder den Spulen zur Kontaktabhebung mit dem Phasenleiter verbunden ist, aus einem Metalloxydvaristor besteht und der Überspannungsableiter (41, 86), der nach der Spule oder den Spulen des elektromagnetischen Auslösers oder der Spule oder den Spulen zur Kontaktabhebung mit dem Phasenleiter verbunden ist, als Suppressordiode (TAZ-Diode) ausgeführt ist.

5. Installationsschutzschalter nach einem der Ansprüche 1 bis 4, dadurch gekennzeichnet, dass die Verbindung der beiden Überspannungsableiter (40, 85; 41, 86) mit dem Neutralleiter (N) – auf die Richtung des Energieflusses bezogen – vor dem Unterbrecherkontakt (31) im Neutralleiter erfolgt (Fig. 4).

6. Installationsschutzschalter nach einem der Ansprüche 1 bis 5, dadurch gekennzeichnet, dass ein oder beide Überspannungsableiter (40, 85; 41, 86) – auf die Richtung des Energieflusses bezogen – nach dem Summenstromwandler (55) für die Fehlerstromauslösung mit dem Phasenleiter verbunden sind, so dass bei Beschädigung eines Ableiters auch kleine Netzströme, die über den Ableiter fliessen, zum Ansprechen der Fehlerstromauslösung führen (Fig. 5 und 6).

7. Installationsschutzschalter nach Anspruch 6, dadurch gekennzeichnet, dass die Fehlerstromauslösung über ein Zeitverzögerungselement (61) erfolgt, um Fehlauslösungen des Installationsschutzschalters durch Stossströme oder beim Ansprechen der Ableiter zu vermeiden (Fig. 6).

8. Installationsschutzschalter nach einem der Ansprüche 1 bis 7, dadurch gekennzeichnet, dass Stromkreise mit elektronischen Bauteilen für die Fehlerstromauslösung parallel zu dem zuerst ansprechenden Überspannungsableiter (41, 86) geschaltet sind und dadurch vor Überspannungsschäden geschützt werden (Fig. 7).

9. Installationsschutzschalter nach einem der Ansprüche 1 bis 8, dadurch gekennzeichnet, dass der zuerst ansprechende Überspannungsableiter (41, 86) den anlagenseitigen Anschlussklemmen und der in der Folge ansprechende Überspannungsableiter (40, 85) den netzseitigen Anschlussklemmen direkt parallel geschaltet ist (Fig. 8).

10. Installationsschutzschalter nach einem der Ansprüche 1 bis 9, mit einem Gehäuse, das aus nebeneinander angeordneten Schaltfluchten (90, 91, 92, 93; 100, 101) für die Phasenleiter (L1, L2, L3) und für den Neutralleiter (N) besteht, dadurch gekennzeichnet, dass in einem zusätzlichen Bauteil (94; 102), der in seiner Formgebung den Schaltfluchten angepasst ist, die Überspannungsableiter (40, 85; 41, 86) untergebracht sind und dieser Bauteil neben oder zwischen den Schaltfluchten für die Aussenleiter und den Neutralleiter angeordnet ist (Fig. 9 und 10).

11. Installationsschutzschalter nach einem der Ansprüche 1 bis 9, dadurch gekennzeichnet, dass zwei Anbauteile vorgesehen sind, die durch Steck- oder Schraubverbindungen, oder auf eine andere geeignete Art mit dem Hauptteil des Installationsschutzschalters verbunden sind, wobei in einem Anbauteil (111), der die netzseitigen Anschlussklemmen trägt, die später ansprechende Überspannungsableitergruppe (40, 85) und in dem anderen Anbauteil (112), der die anlagenseitigen Anschlussklemmen trägt, die zuerst ansprechende Überspannungsableitergruppe (41, 86) untergebracht ist (Fig. 11).

## Claims

1. Installation protection switch comprising an overcurrent and preferably also a fault-current trip in a housing which is preferably constructed in the form of adjacently arranged switching rows for the phase conductors (L1, L2, L3) and the neutral conductor (N) and in which the connecting terminals, the contacts (31) for interrupting the phase conductors and the neutral conductor, or a continuous neutral conductor, the switching latch (33, 77) or the switching latches with the thermal and electro-magnetic trips and, if necessary, coils (71) for contact lifting, and an electronic amplifier device (62) or an electro-mechanical fault-current trip (54) and the core-balance transformer (55) for detecting fault currents and a testing device are housed, characterised in that for each phase conductor (L1, L2, L3) two overvoltage arrestors (40, 41; 85, 86) are additionally provided in cascaded form – referred to the direction of energy flow – in the housing of the installation protection switch, in which arrangement one end of an overvoltage arrestor (40; 85) in front of the coil (32) or the coils of the electro-magnetic trip or of the coil or the coils for contact lifting is connected to the phase conductor and one end of the second overvoltage arrestor (41; 86) following the coil (32) or the coils of the electro-magnetic trip or of the coil (71) or the coils for contact lifting is connected to the phase conductor and in which arrangement the other ends of the two overvoltage arrestors are connected to the neutral conductor (N) or the protective conductor (PE).

2. Installation protection switch according to claim 1, characterised in that the two overvoltage arrestors (40, 85; 41, 86) are matched to each other in such a manner that, even before the highest permissible energy absorption of the overvoltage arrestor (41, 86) responding first is exceeded, the overvoltage arrestor (40, 85) responding later begins with its energy absorption and in this manner both arrestors are largely protected from overloading and destruction within the normal operating range and the electrical system is largely protected from overvoltages.

3. Installation protection switch according to claim 1 or 2, characterised in that the overvoltage arrestor (40, 85) which is connected to the phase conductor in front of the coil (32) or the coils of the electro-magnetic trip or the coil (71) or the coils for contact lifting, has a response time of the order of magnitude of some tenths up to some ten nanoseconds ($10^{-9}$s) on occurrence of an overvoltage wave, and as high as possible an energy absorption capacity, that the overvoltage arrestor (41, 86), which is connected to the phase conductor after the coil (32) or the coils of the electro-magnetic trip or the coil (71) or the coils for contact lifting, has a shorter response time down to

some picoseconds ($10^{-12}$s) and a lower energy absorption capacity than the preceding overvoltage arrestor (40, 85) and that both overvoltage arrestors are matched to each other in such a manner that, even before the highest permissible energy absorption of the overvoltage arrestor first responding is exceeded, the overvoltage arrestor responding later begins with its energy absorption and in this manner both arrestors are largely protected from overloading and destruction within the normal operating range and the electrical system is largely protected from overvoltages.

4. Installation protection switch according to one of claims 1 to 3, characterised in that the overvoltage arrestor (40, 85) which is connected to the phase conductor in front of the coil (71) or the coils for contact lifting consists of a metal oxide varistor and the overvoltage arrestor (41, 86) which is connected to the phase conductor after the coil or the coils of the electro-magnetic trip or the coil or the coils for contact lifting is constructed as a suppressor diode (TAZ-diode).

5. Installation protection switch according to one of claims 1 to 4, characterised in that the two overvoltage arrestors (40, 85; 41, 86) are connected to the neutral conductor (N) in front of the interrupter contact (31) in the neutral conductor – referred to the direction of the energy flow (Fig. 4).

6. Installation protection switch according to one of claims 1 to 5, characterised in that one or both overvoltage arrestors (40, 85; 41, 86) are connected to the phase conductor after the core-balance transformer (55) for the fault-current tripping – referred to the direction of the energy flow – so that when one arrestor is damaged, even small power-system currents flowing over the arrestor lead to the fault-current trip responding (Fig. 5 and 6)

7. Installation protection switch according to claim 6, characterised in that the fault-current tripping occurs via a time-delay element (61) to avoid mistripping of the installation protection switch due to surge currents or when the arrestors respond (Fig. 6).

8. Installation protection switch according to one of claims 1 to 7, characterised in that circuits comprising electronic components for the fault-current tripping are connected in parallel with the overvoltage arrestor (41, 86) first responding and are thus protected from overvoltage damage (Fig. 7).

9. Installation protection switch according to one of claims 1 to 8, characterised in that the overvoltage arrestor (41, 86) first responding is connected directly in parallel with the system-side connecting terminals and the overvoltage arrestor (40, 85) subsequently responding is connected directly in parallel with the power-system-side connecting terminals (Fig. 8).

10. Installation protection switch according to one of claims 1 to 9, comprising a housing which consists of adjacently arranged switching rows (90, 91, 92, 93; 100, 101) for the phase conductors (L1, L2, L3) and for the neutral conductor (N), characterised in that the overvoltage arrestors (40, 85; 41, 86) are accommodated in an additional component (94; 102), the shape of which is matched to the switching rows, and this component is arranged next to or between the switching rows for the outer conductors and the neutral conductor (Fig. 9 and 10).

11. Installation protection switch according to one of claims 1 to 9, characterised in that two adapter parts are provided which are connected by plug-in or screw connections or in another suitable manner of the main part of the installation protection switch, in which arrangement the overvoltage arrestor group (40, 85) responding later is accommodated in an add-on part (111) which carries the power-system-side connecting terminals and the overvoltage arrestor group (41, 86) first responding is accommodated in the other add-on part (112) which carries the system-side connecting terminals (Fig. 11).

## Revendications

1. Disjoncteur de protection d'installation avec déclenchement par surintensité et également, de préférence, par courant de défaut, dans un boîtier exécuté de préférence sous la forme de files de commutation disposées côte à côte, pour les conducteurs de phase (L1, L2, L3) et le conducteur neutre (N), et dans lequel sont logés les bornes de raccordement, les contacts (31) pour l'interruption des conducteurs de phase et du conducteur neutre, un conducteur neutre sans interruption, la serrure de verrouillage (33, 77) ou les serrures de verrouillage avec les déclencheurs thermiques et électromagnétiques et éventuellement des bobines (71) pour le décollement des contacts, ainsi qu'un dispositif électronique d'amplification (62) ou un déclencheur électromécanique à courant de défaut (54) avec le transformateur différentiel (55) pour la détection des courants de défaut et un dispositif de contrôle, caractérisé par le fait que le boîtier du disjoncteur de protection d'installation contient en plus, en cascase – relativement au sens d'écoulement de l'énergie –, pour chaque conducteur de phase (L1, L2, L3) deux limiteurs de tension (40, 41; 85, 86), une extrémité d'un limiteur de tension (40; 85) se trouvant reliée au conducteur de phase en avant de la (ou des) bobine(s) (32) du déclencheur électromagnétique ou de la (ou des) bobine(s) pour le décollement des contacts, et une extrémité du deuxième limiteur de tension (41; 86) se trouvant reliée au conducteur de phase derrière la (ou les) bobine(s) (32) du déclencheur électromagnétique ou la (ou les) bobine(s) (71) pour le décollement des contacts, et les autres extrémités des deux limiteurs de tension étant connectées au conducteur neutre (N) ou au conducteur de protection (PE).

2. Disjoncteur de protection d'installation selon la revendication 1, caractérisé par le fait que les deux limiteurs de tension (40, 85; 41, 86) sont accordés l'un à l'autre de telle façon qu'avant même que ne soit dépassée l'absorption maximale d'énergie du limiteur de tension (41, 86) répondant en premier, le limiteur de tension (40, 85) répondant plus tard commence son absorption d'énergie et, ainsi, les deux limiteurs sont, dans la plage normale de service, protégés contre les surchages et la destruction, et l'installation électrique est protégée contre les surtensions.

3. Disjoncteur de protection d'installation selon revendication 1 ou 2, caractérisé par le fait que le limiteur de tension (40, 85), qui est relié au conducteur de phase en avant de la (ou des) bobine(s) (32) du déclencheur électromagnétique ou de la (ou des) bobine(s) (71) pour le décollement des contacts possède un temps de réponse, dans le cas d'apparition d'une onde de surtension, de l'ordre de quelques dixièmes à environ quelques dizaines de nanosecondes ($10^{-9}$s) et un pouvoir d'absorption d'énergie aussi élevé que possible, que le limiteur de tension (41, 86) qui est relié au conducteur de phase derrière la (ou les) bobine(s) (32) du déclencheur électromagnétique ou la (ou les) bobine(s) (71) pour le décollement des contacts présente un temps de réponse plus court descendant jusqu'à quelques picosecondes ($10^{-12}$s), et un pouvoir d'absorption de l'énergie plus petit que le limiteur de tension (40, 85) relié en avant, et que les deux limiteurs de tension sont accordés l'un à l'autre de telle façon qu'avant même que ne soit dépassée l'absorption maximale d'énergie du limiteur de tension répondant en premier, le limiteur de tension répondant plus tard commence son absorption d'énergie et, ainsi, les deux limiteurs sont, dans la plage normale de service, protégés contre les surchages et la destruction, et l'installation électrique est protégée contre les surtensions.

4. Disjoncteur de protection d'installation selon l'une des revendications 1 à 3 , caractérisé par le fait que le limiteur de tension (40, 85) qui est relié au conducteur de phase en avant de la (ou des) bobine(s) (71) pour le décollement des contacts consiste en un varistor à oxyde métallique et que le limiteur de tension (41, 86) qui est relié au conducteur de phase derrière la (ou les) bobine(s) du déclencheur électromagnétique ou la (ou les) bobine(s) pour le décollement des contacts est réalisé comme diode suppresseuse (diode TAZ).

5. Disjoncteur de protection d'installation selon l'une des revendications 1 à 4, caractérisé par le fait que la liaison des deux limiteurs de tension (40, 85; 41, 86) avec le conducteur neutre (N) – relativement au sens d'écoulement de l'énergie – est établie en avant du contact interrupteur (31) dans le conducteur neutre (Fig. 4).

6. Disjoncteur de protection selon l'une des revendications 1 à 5, caractérisé par le fait que l'un ou les deux limiteurs de tension (40, 85; 41, 86) sont reliés au conducteur de phase – relativement au sens d'écoulement de l'énergie – derrière le transformateur différentiel (55) pour le déclenchement par courant de défaut, de sorte qu'en cas d'endommagement d'un limiteur, des courants même faibles du réseau, qui traversent le limiteur, provoquent l'entrée en action du déclenchement par courant de défaut (Fig. 5 et 6).

7. Disjoncteur de protection d'installation selon la revendication 6, caractérisé par le fait que le déclenchement par courant de défaut s'effectue par l'intermédiaire d'un élément retardateur (61), afin d'éviter des déclenchements par défaut de l'interrupteur de protection de l'installation du fait de courants transitoires ou lors de l'entrée en action des limiteurs (Fig. 6).

8. Disjoncteur de protection d'installation selon l'une des revendications 1 à 7, caractérisé par le fait que des circuits comportant des composants électronique pour le déclenchement par courant de défaut sont connectés en parallèle avec le limiteur de tension (41, 86) répondant en premier et sont, par ce moyen, protégés contre des dommages dus à des surtensions (Fig. 7).

9. Disjoncteur de protection d'installation selon l'une des revendications 1 à 8, caractérisé par le fait que le limiteur de tension (41, 86) répondant en premier est directement connecté en parallèle avec les bornes de raccordement côté installation et que le limiteur de tension (40, 85) répondant plus tard est directement connecté en parallèle avec les bornes de raccordement côté réseau (Fig. 8).

10. Disjoncteur de protection d'installation selon l'une des revendications 1 à 9, avec un boîtier qui est constitué de files de commutation (90, 91, 92, 93; 100, 101) disposées côte à côte pour les conducteurs de phase (L1, L2, L3) et pour le conducteur neutre (N), caractérisé par le fait que les limiteurs de tension (40, 85; 41, 86) sont logés dans un composant supplémentaire (94, 102) qui est adapté de par sa conformation aux files de commutation, et que ce composant est disposé à côté des ou entre les files de commutation pour les conducteurs de phase et le conducteur neutre (Fig. 9 et 10).

11. Disjoncteur de protection d'installation selon l'une des revendications 1 à 9, caractérisé par le fait que sont prévus deux composants supplémentaires fixés à la partie principale du disjoncteur de protection d'installation par assemblages enfichables ou à vis, ou de toute autre manière appropriée, le groupe de limiteurs de tension (40, 85) repondant plus tard étant logé, dans un composant supplémentaire (111) portant les bornes de raccordement côté réseau, et le groupe de limiteurs de tension (41, 86) répondant en premier étant logé dans l'autre composant supplémentaire (112), portant les bornes de raccordement côté installation (Fig. 11).

Fig.1

010070

Fig.2

# F i g.3

# F i g.4

L N Netz

60
33
31
32a
40
32
41
53
58
55

L N Verbraucher

# F i g.11

L1 L2 L3 N

40/85
111
Netz
I
O
T
110
41/86
112
Verbraucher

L1 L2 L3 N

# Fig.5

L  N  Netz

31  33  55  58  40  32a  32  41  L  N  Verbraucher

# Fig.6

L  N  Netz

31  33  32a  40  32  55  58  41  Δt  61  L  N  Verbraucher

F i g.7

F i g.8

**F i g.9**

**F i g.10**